# FASCICULE DE BREVET EUROPEEN

(11) **EP 4 127 114 B1**
(45) Date de publication et mention de la délivrance du brevet: **07.08.2024**
(21) Numéro de dépôt: 21712871.9
(22) Date de dépôt: 23.03.2021
(51) Int. Cl.: C10M 145/14, C10N 30/00, C10N 40/25

(54) **UTILISATION DE POLYMÈRE D'ALKYLE MÉTACRYLATE POUR RÉDUIRE LES ÉMISSIONS DE PARTICULES**
VERWENDUNG EINES ALKYLMETHACRYLAT-POLYMERS ZUR VERRINGERUNG VON PARTIKELEMISSIONEN
USE OF AN ALKYL METHACRYLATE POLYMER TO REDUCE PARTICULATE EMISSIONS

(30) Priorité: 25.03.2020 FR 2002904
(43) Date de publication de la demande: 08.02.2023
(73) Titulaire: TotalEnergies OneTech, 92400 Courbevoie (FR)
(72) Inventeur: BURETTE, Gautier, 69360 SOLAIZE (FR); PAOLONI, François, 69360 SOLAIZE (FR)
(74) Mandataire: Lavoix
(86) Numéro de dépôt international: PCT/EP2021/057415
(87) Numéro de publication internationale: WO 2021/191201

(56) Documents cités:
- WO-A1-2012/025901
- WO-A1-2016/174186
- WO-A1-2018/041755
- FR-A1- 2 896 806

## Description

La présente invention concerne l'utilisation de polymère d'alkyle méthacrylate tel que défini dans les revendications annexées, pour réduire les émissions de particules des véhicules motorisés.

En 1992, la première norme européenne sur les émissions des véhicules à moteurs à combustion a été introduite. Entrée en vigueur le 1er septembre 2014 pour les véhicules nouvellement homologués et applicable à tous les véhicules neufs à partir du 1er septembre 2015, la norme antipollution Euro 6 (norme EC 715/2007, amendement 692/2008) concerne tant les moteurs essence que diesel. Cette norme vise notamment quatre polluants : le monoxyde de carbone (CO), les hydrocarbures imbrûlés (HC), les oxydes d'azote (NOx), la masse (PM) et le nombre (PN) des particules, parmi lesquelles les suies, les deux derniers restant les plus problématiques pour le système de dépollution des motorisations modernes.

Les normes ultérieures vont prévoir quant à elle des réductions du nombre et de la masse de particules à des niveaux bien plus drastiques, plus particulièrement celui de la taille de particules (directement relié à la masse et au nombre) à des valeurs inférieures à 23 nm.

La chasse au CO₂ a incité les constructeurs à augmenter leur rendement pour en abaisser les consommations. Pour cela, il a souvent été opté pour un fonctionnement en mélange pauvre (excès d'air par rapport à la masse de carburant). Malheureusement, ce procédé engendre une augmentation significative des émissions d'oxyde d'azote et de particules.

Les constructeurs ont également opté par le passé pour l'introduction de systèmes de filtre à particules dans le souci de faire diminuer le nombre et la masse des particules émises dans l'atmosphère. Le fonctionnement de ces systèmes réside dans la plupart des cas en une combustion des suies par une élévation de la température des gaz d'échappement à l'entrée du filtre. Cette opération nécessite la présence d'une catalyse.

WO 2016/174186 A1 divulgue une composition lubrifiante comprenant au moins une huile de base et au moins un polymère d'alkyle méthacrylate en peigne pour réduire la consommation de carburant. FR 2 896 806 A1 concerne l'utilisation d'une composition lubrifiante comprenant une huile de base et une dispersion colloïdale de fer pour le traitement de gaz d'échappement, notamment pour la réduction de l'émission des particules nocives.

Il existe un intérêt à pouvoir également trouver des additifs pour compositions lubrifiantes et des compositions lubrifiantes ayant un impact direct sur l'émission des particules.

Un objectif de la présente invention est donc de fournir un additif pour composition lubrifiante ayant un impact direct sur les émissions de particules.

Un autre objectif de la présente invention est de fournir une composition lubrifiante ayant un impact direct sur les émissions de particules.

D'autres objectifs encore apparaîtront à la lecture de la description de l'invention qui suit.

Ces objectifs sont remplis par la présente invention qui concerne l'utilisation d'une composition lubrifiante comprenant une huile de base et au moins un polymère d'alkyle méthacrylate, pour réduire les émissions de particules d'un moteur.

Dans le cadre de la présente invention, on désigne par « particules » les particules émises à l'échappement des véhicules motorisés. Cela représente un ensemble de particules microscopiques (de taille de l'ordre du µm ou inférieure). Ces substances sont variées et sont comprises dans les gaz d'échappement des véhicules issus de la combustion du carburant. Ces substances peuvent être solides ou liquides. Le terme de particules comprend le terme de suies, qui se forment, s'oxydent et renferment des hydrocarbures imbrûlés, des dérivés oxygénés (cétones, esters, aldéhydes, lactones, éthers, acides organiques) et des hydrocarbures aromatiques polycycliques (les fameux HAP) accompagnés de leurs dérivés nitrés, oxygénés, etc. Se trouvent également des dérivés minéraux (SO2, sulfates...) et métalliques.

De façon particulièrement avantageuse, la présente invention permet la réduction des émissions de particules présentant une taille inférieure ou égale à 23 nm.

Dans le cadre de la présente invention, on entend par « taille des particules » des particules, ou agglomérat de particules dont la taille est comprise entre 0,001 et 23 nm, de préférence entre 0,01 et 23 nm, et de préférence encore entre 0,1 et 23 nm.

La taille des particules peut notamment être mesurée par un spectrométrie, par exemple à l'aide d'un spectromètre fabriqué par la société Cambustion sous la référence commerciale DMS500.

Par réduction des émissions de particules, on entend notamment la réduction du nombre de particules, notamment de particules présentant une taille inférieure ou égale à 23 nm. Il est notamment question de la réduction du nombre de particules émises lors d'un cycle WLTC. Cela est mesuré principalement en fonction d'un nombre de kilomètres parcourus.

La nombre des particules peut notamment être mesurée par un dispositif de comptage des particules tel que le dispositif existant sous la référence commerciale AVL APC 489.

De préférence, la présente demande concerne la réduction de l'émission de suies.

De préférence, la présente invention concerne la réduction de l'émission de particules, de préférence de particules de taille inférieure ou égale à 23 nm, de préférence de suies, pendant les cycles urbain (faible vitesse), péri-urbain (vitesse modérée) et routier (grande vitesse) définis par le WLTC (ou WLTP) (procédure mondiale harmonisée de tests pour les véhicules légers) et sur l'ensemble du WLTC.

Le polymère d'alkyle méthacrylate selon l'invention est un polymère en peigne dont les chaînes pendantes comprennent au moins 50 atomes de carbone et choisi parmi les copolymères d'au moins une polyoléfine et d'au moins un poly(alkyl)methacrylate ; les copolymères d'au moins une polyoléfine et d'au moins un poly(alkyl)acrylate.

De préférence, le polymère d'alkyle méthacrylate est un polymère en peigne dont les chaînes pendantes sont obtenues par polymérisation ou par copolymérisation d'oléfines, de préférence d'oléfines comprenant de 8 à 17 atomes de carbone et choisies parmi les styrènes, les styrènes substitués, le butadiène additionné en 1 ,4, le butadiène additionné en 1 ,2, les composés de formule (C1) 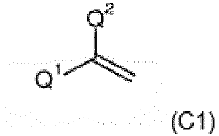 dans laquelle Q¹et Q² représentent indépendamment un atome d'hydrogène ou un groupement C1-C₁₈-alkyl.

Avantageusement, le polymère d'alkyle méthacrylate est préparé par copolymérisation :
▪ d'un monomère oléfinique de formule (C2) 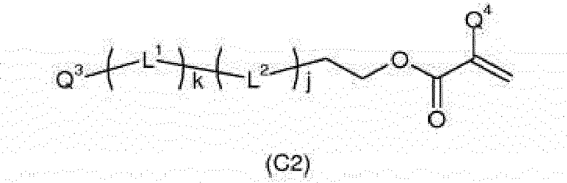 dans laquelle
   o Q³ représente un groupement C₂-C₈-alkyl linéaire ou ramifié ; un groupement Cs-Cs-cycloalkyl ; un groupement C₆-C₁₀-aryl ;
   o Q⁴ représente un atome d'hydrogène ou un groupement méthyle ;
   o L¹ représente un résidu d'addition 1 ,4 de butadiène ; un résidu d'addition 1 ,4 de butadiène substitué par au moins un groupement C1-Cs-alkyl ; un résidu d'addition vinylique de styrène ; un résidu d'addition vinylique de styrène substitué par au moins un groupement C1-C₆-alkyl ;
   o L² représente un résidu d'addition vinylique de butadiène ; un résidu d'addition vinylique de butadiène substitué par un groupement C1-Cs-alkyl ; un résidu d'addition vinylique de styrène ; un résidu d'addition vinylique de styrène substitué par au moins un groupement C1-C₆-alkyl ;
   o k et j représentent indépendamment 0 ou un nombre entier allant de 1 à 3 000 et la somme (k + j) est égale à un nombre entier allant de 7 à 3 000, de préférence allant de 10 à 3 000 ; et
▪ d'un monomère ester alkyl-acrylique ou ester alkyl-methacrylique de formule (C3) 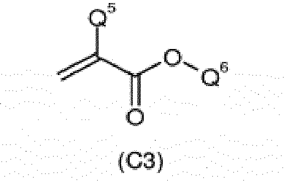 Dans laquelle :
   Q⁵ représente un atome d'hydrogène ou un groupement méthyle
   Q⁶ représente un C1-C26 alkyl linéaire ou ramifié

De façon encore plus avantageuse, le polymère d'alkyle méthacrylate est préparé par copolymérisation :
▪ d'un monomère oléfinique de formule (C4) 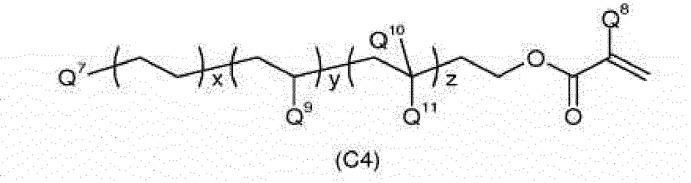 dans laquelle :
   o Q⁷ représente un groupement C1-C₆-alkyl ; un groupement C₆-aryl ;
   o Q⁸ représente un atome d'hydrogène ou un groupement méthyle ;
   o Q⁹, Q¹⁰ et Q¹¹ représentent indépendamment un atome d'hydrogène ou un groupement C1-C₁₈-alkyl ;
   o x, y et z représentent indépendamment 0 ou un nombre entier allant de 1 à 3 000 et la somme (x + y + z) est égale à un nombre entier allant de 7 à 3 000, de préférence allant de 10 à 3 000 ; et
▪ d'un monomère ester alkyl-acrylique ou ester alkyl-méthacrylique de formule (C3) 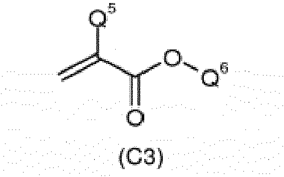 dans laquelle :
   o Q⁵ représente un atome d'hydrogène ou un groupement méthyle ;
   o Q⁶ représente un C₁- C₂₆-alkyl linéaire ou ramifié.

De manière plus préférée, Q⁷ représente un groupement phényl ou un groupement butyl linéaire ou ramifié, en particulier un groupement n-butyl.

De manière plus particulièrement préférée, le polymère à peigne est préparé par copolymérisation :
▪ d'un monomère oléfinique de formule (C5) 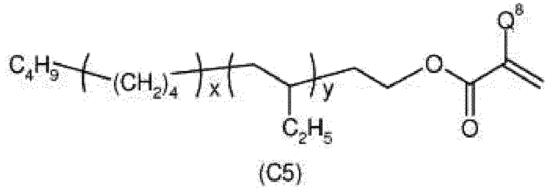 dans laquelle
   o Q⁸ représente un atome d'hydrogène ou un groupement méthyle ;
   o x et y représentent indépendamment 0 ou un nombre entier allant de 1 à 3000 et la somme (x+y+z) est égale à un nombre entier allant de 7 à 3000, de préférence allant de 10 à 3000 ; et
▪ d'un monomère ester alkyl-acylique ou ester alkyl-methacrylique de formule (C3) 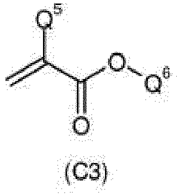 dans laquelle
   o Q⁵ représente un atome d'hydrogène ou un groupement méthyle ;
   o Q⁶ représente C1-C26-alkyl linéaire ou ramifié.

De préférence, le polymère d'alkyle méthacrylate est mis en oeuvre en une quantité de 0,1 à 15% en poids par rapport au poids totale de la composition lubrifiante.

L'huile de base utilisée dans les compositions lubrifiantes de l'invention peuvent être des huiles d'origine minérale ou synthétique appartenant aux groupes I à V selon les classes définies par la classification API (ou leurs équivalents selon la classification ATIEL (Tableau 1) ou leurs mélanges.

### [Table 1]

**Tableau 1**

| | Teneur en substances saturées | Teneur en soufre | Indice de viscosité (VI) |
|---|---|---|---|
| Groupe I Huiles minérales | < 90 % | > 0,03 % | 80 ≤ VI < 120 |
| Groupe Il Huiles hydrocraquées | ≥ 90 % | ≤ 0,03 % | 80 ≤ VI < 120 |
| Groupe III Huiles Hydro-isomérisées | ≥ 90 % | ≤ 0,03 % | ≥ 120 |
| Groupe IV | Polyalphaolefines (PAO) | | |
| Groupe V | Esters et autres bases non inclues dans les groups I à IV | | |

Les huiles de base minérales de l'invention incluent tout type d'huile de base obtenue par distillation atomosphérique et sous vide de pétrole brute, suivi par des opérations de rafinage telle que l'extraction par solvant, désasphaltage, déparaffinage au solvant, hydrotraitement, hydrocraquage, hydroisomérisation et hydrofinissage.

Des mélanges d'huiles synthétiques et minérales peuvent aussi être utilisés.

Les huiles de base des compositions lubrifiantes selon l'invention peuvent aussi être choisies parmi les huiles synthétiques, tels que certains esters d'acides carboxyliques et d'alcools, et les polyalphaoléfines. Les polyalphaoléfines utilsées en tant qu'huile de base sont par exemple obtenues à partir de monomères comprenant de 4 à 32 atomes de carbone, par exemple à partir d'octène ou décène, et pour lesquels la viscosité à 100°C est comprise entre 1,5 et 15 mm2.s-1 selon la norme ASTM D445. Leur masse molaire moyenne est généralement comprise entre 250 et 3000 selon la norme ASTM D5296.

La composition lubrifiante selon l'invention peut comprendre au moins 50% en poids d'huile de base par rapport au poids total de la composition. De manière plus avantageuse, la composition lubrifiante selon l'invention comprend au moins 60% en poids, ou même au moins 70% en poids, d'huiles de base par rapport au poids total de la composition lubrifiante. De manière plus préférée, la composition lubrifiante selon l'invention comprend de 75 à 97% en poids d'huiles de base par rapport au poids total de la composition.

La composition de l'invention peut également comprendre au moins un additif.

De nombreux additifs peuvent être utilisés dans les compositions lubrifiantes selon l'invention.

Les additifs préférés pour la composition lubrifiante selon l'invention sont choisis parmi les additifs détergents, les additifs modificateurs de frottement diffèrent des composés molybdène défini ci-dessus, des additifs extrême pression, des dispersants, activateurs du point d'écoulement, agents anti-mousse, épaississants et leurs mélanges.

De préférence, les compositions lubrifiantes selon l'invention, comprennent au moins un additif extrême pression, ou un mélange.

Les additifs anti-usure et les additifs extrême pression protègent les frictions des surfaces en formant un film de protection adsorbé sur ses surfaces.

Il existe une grande variété d'additifs anti-usure. De préférence, pour les compositions lubrifiantes de l'invention, les additifs anti-usure sont choisis parmi les additifs comprenant du phosphore et du soufre tels que les métaux alkylthiophosphate, en particulier zinc alkylthiophosphate, et plus précisément le zinc dialkyldithiophosphate ou ZnDTP. Les composés préférés sont de formule Zn((SP(S)(OR)(OR'))2, dans laquelle R et R', identique ou différent, représente indépendamment un groupe alkyle, de préférence un groupe alkyle comprenant de 1 à 18 atomes de carbone.

Les phosphates d'amine sont également des additifs anti-usure qui peuvent être utilisés dans les compositions lubrifiantes de l'invention. Cependant, les atomes de phosphore apportés par ces additifs peuvent agir comme poison des systèmes catalytiques des automobiles puisqu'ils génèrent des cendres. Il est possible de minimiser ces effets en substituant une partie des phosphates d'amine avec des additifs n'apportant pas de phosphore, tels que par exemple les polysulfides, notamment les oléfines contenant du soufre.

Avantageusement, les compositions lubrifiantes selon l'invention peuvent comprendre de 0,01 à 6% en poids, de préférence de 0,05 à 4% en poids, plus préférentiellement de 0,1 à 2% en poids par rapport au poids total de composition lubrifiante, d'additifs anti-usure et extrême pression.

Avantageusement, les compositions lubrifiantes selon l'invention comprennent de 0,01 à 6% en poids, de préférence de 0,05 à 4% en poids, plus préférentiellement de 0,1 à 2% en poids par rapport au poids total de composition lubrifiante, d'additifs anti-usure (ou composé anti-usure).

Avantageusement, les compositions selon l'invention peuvent comprendre au moins un additif modificateur de friction différents des composés molybdène de l'invention. Les additifs modificateurs de friction peuvent notamment être choisis parmi les composes apportant des éléments métalliques et des composes sans cendres. Parmi les composes apportant des éléments métalliques il peut être fait mention des complexes de métaux de transition tels que Mo, Sb, Sn, Fe, Cu, Zn pour lesquels les ligands peuvent être des composés hydrocarbonés comprenant des atomes d'oxygène, d'azote, de soufre ou de phosphore. Les additifs modificateurs de friction sans cendres sont généralement d'origine organique ou peuvent être choisis parmi les monoester d'acide gras et de polyols, les amines alcoxylées, les amines grasses alcoxylées, les époxydes gras, les borates d'époxydes gras, les amines grasses ou les esters d'acide de glycérol. Selon l'invention, les composes gras comprenant au moins un groupe hydrocarboné comprenant de 10 à 24 atomes de carbone.

Avantageusement la composition lubrifiante selon l'invention peut comprendre de 0,01 à 2% en poids ou de 0,01 à 5% en poids, de préférence de 0,1 à 1,5% en poids ou de 0,1 à 2% en poids par rapport au poids total de la composition lubrifiante, d'additif modificateur de friction différent des composés molybdène selon l'invention.

Avantageusement, la composition lubrifiante selon l'invention peut comprendre au moins un additive antioxydant.

Les additifs antioxydant généralement retardant la dégradation de la composition lubrifiante. Cette dégradation s'exprime le plus souvent par la formation de dépôt, par la présence de boues ou par une augmentation de la viscosité de la composition lubrifiante.

Les additifs antioxydants agissent généralement comme inhibiteurs radicalaires ou inhibiteurs destructeurs de l'hydroperoxyde. Parmi les antioxydants couramment utilisés on peut citer les antioxydants de type phénolique, les antioxydants de type amine, les antioxydants contenant du soufre et du phosphore. Certains de ces antioxydants, par exemple ceux comprenant du soufre et du phosphore peuvent générer des cendres. Les additifs antioxydants phénoliques peuvent être exempt de cendres ou bien être sous la forme de sels métalliques neutres ou basiques. Les additifs antioxydants peuvent notamment être choisis parmi les phénols stériquement encombrés, des esters de phénols stériquement encombrés, des phénols stériquement encombrés comprenant un pont thioéther, des diphénylamines, des diphénylamines substituées avec au moins un groupe alkyl en C1 à C12, des N,N'-dialkyl-aryl-diamines et leurs mélanges.

De préférence selon l'invention, les phénols stériquement encombrés sont choisis parmi les composés comprenant un groupe phénol pour lequel au moins un des atomes de carbone au voisinage de l'atome de carbone portant la fonction alcool est substitué par au moins un groupe alkyle en C1 à C10, de préférence un groupe alkyle en C1 à C6, de préférence un groupe alkyle en C4, de préférence un groupe ter-butyle.

Les composes amines sont une autre classe d'additifs antioxydants qui peuvent être utilises, optionnellement en combinaison avec des additifs antioxydants phénoliques. Des exemples de composes amines sont les amines aromatiques, par exemple les amines aromatiques de formule NRaRbRc dans laquelle Ra représente un groupe aliphatique ou un groupe aromatique, optionnellement substitué, Rb représente un groupe aromatique, optionnellement substitué, Rc représente un atome d'hydrogène, un groupe alkyle, un groupe aryle group ou un groupe de groupe de formule RdS(O)zRe dans lequel Rd représente un groupe alkylène ou alkenylène, Re représente un groupe alkyle, un groupe alkényle ou un groupe aryle et z représente 0, 1 ou 2.

Les alkyl-phénols contenant du soufre ou leurs sels de métaux alcalins ou alcalino-terreux peuvent aussi être utilisés comme additifs antioxydants.

D'autres classes d'additifs antioxydants sont les composés comprenant du cuivre, par exemple thio- ou dithio-phosphate de cuivre, des sels de cuivre et d'acides carboxylique, des dithiocarbamates, des sulfonates, des phénates, des acétylacétonates de cuivre. Les sels de cuivre I et II, les sels d'acide ou d'anhydride succinique peuvent également être utilisés.

Les compositions lubrifiantes selon l'invention peuvent également comprendre tout type d'antioxydant connu de l'homme du métier.

Avantageusement, la composition lubrifiante comprend au moins un additif antioxydant exempt de cendres.

Egalement avantageusement la composition lubrifiante selon l'invention comprend de 0,1 à 2% en poids par rapport au poids total de la composition, d'au moins un additive antioxydant.

La composition lubrifiante selon l'invention peut également comprendre au moins un additif détergent.

Les additifs détergents permettent généralement de réduire la formation de dépôts à la surface des parties métalliques par dissolution des produits secondaires d'oxydation et de combustion.

Les additifs détergents pouvant être utilisés dans les compositions lubrifiantes selon l'invention sont généralement connus de l'homme du métier. Les additifs détergents peuvent être des composés anioniques comprenant une longue chaîne hydrocarbonées lipophilique et une tête hydrophobe. Le cation associé peut être un cation métallique d'un métal alcalin ou alcalino-terreux.

Les additifs détergents sont de préférence choisis parmi les sels de métaux alcalins ou alcalino-terreux d'acide carboxylique, les sulfonates, les salicylates, les naphténates, ainsi que les sels de phénates. Les métaux alcalins et alcalino-terreux sont de préférence le calcium, le magnésium, le sodium ou le baryum.

Ces sels métalliques comprennent généralement le métal en quantité stœchiométrique ou en excès, c'est-à-dire dans une teneur supérieure à la teneur stœchiométrique. Ceux-ci sont alors des détergents surbasés; l'excès de métal impliquant la nature surbasée de l'additif détergent est généralement sous la forme d'un sel métallique insoluble dans l'huile, par exemple carbonate, hydroxyde, oxalate, acétate, glutamate, de préférence carbonate.

Avantageusement, la composition lubrifiante selon l'invention peut comprendre de 0,5 à 8% ou de 2 à 4% en poids d'additif détergents surbasés par rapport au poids total de la composition lubrifiante.

Egalement de manière avantageuse, la composition lubrifiante selon l'invention peut aussi comprendre un additif abaisseur du point d'écoulement.

En ralentissant la formation de cristaux de paraffine, l'additif abaisseur du point d'écoulement améliore généralement le comportement à froid de la composition lubrifiante selon l'invention.

Comme exemple d'additif abaisseurs du point d'écoulement on peut mentionner, les alkyles polyméthacrylates, polyacrylates, polyarylamides, polyalkylphénols, polyalkylnaphtalène, les alkyls polystyrènes.

Avantageusement, la composition lubrifiante selon l'invention peut aussi comprendre un agent dispersant.

Les agents dispersants peuvent être choisis parmi les bases de Mannich bases, les succinimides et leurs dérivés.

Egalement de manière avantageuse, la composition lubrifiante selon l'invention peut comprendre de 0,2 à 10% en poids d'agent dispersant par rapport au poids total de composition lubrifiante.

Avantageusement, la composition lubrifiante selon l'invention peut également comprendre en outre au moins un autre polymère additionnel améliorant l'indice de viscosité. Comme exemple de polymère additionnel améliorant l'indice de viscosité, on peut citer les esters polymériques, homopolymères ou copolymères, hydrogénés ou non, de styrène, de butadiène, et d'isoprène, les polyméthacrylates (PMA). Egalement avantageusement, la composition lubrifiante selon l'invention peut comprendre de 1 à 15% en poids par rapport au poids total de composition lubrifiante, d'additif améliorant l'indice de viscosité.

La composition lubrifiante selon l'invention peut également comprendre au moins un agent épaississant.

La composition lubrifiante selon l'invention peut également comprendre un agent antimousse et un agent démulsifiant.

De préférence, la composition lubrifiante de l'invention comprend en outre au moins un agent anti-usure, notamment à base de Zinc, notamment ZnDTP.

La présente invention concerne également l'utilisation d'un polymère d'alkyle méthacrylate tel que défini dans les revendications annexées, dans une composition lubrifiante pour moteur pour réduire les émissions de particules.

Décrite est également une méthode de réduction de l'émission de particules dans un moteur, de préférence moteur à gaz, à essence, diesel ou encore hybride, comprenant l'utilisation d'une composition lubrifiante comprenant une huile de base et un polymère d'alkyle méthacrylate.

Décrite est également une méthode de réduction de l'émission de particules dans un moteur, de préférence moteur à gaz, à essence, diesel ou encore hybride, lubrifié par une composition lubrifiante comprenant l'ajout dans ladite composition lubrifiante d'un polymère d'alkyle méthacrylate.

Le polymère d'alkyle méthacrylate, les particules, l'huile de base et la composition lubrifiante étant tels que définis ci-dessus.

La présente invention couvre tous les véhicules motorisés, notamment les véhicules comprenant un moteur 2-temps ou 4-temps, les moteurs essence, diesel, hybride, gaz.

La présente invention couvre tous les véhicules motorisés, de préférence comprenant au moins un moteur à combustion, notamment les véhicules lourds ou véhicules légers.

La présente invention va maintenant être décrite à l'aide d'exemples non limitatifs.

### Exemple 1 : Compositions lubrifiantes

Les compositions lubrifiantes suivants ont été préparées selon le tableau 2 suivant.

**[Table 2]**

| | Composition 1 (selon l'invention) (en % par rapport au poids total de la composition) | Composition 2 (selon l'invention) (en % par rapport au poids total de la composition) | Composition 3 (comparative) (en % par rapport au poids total de la composition) | Composition 4 (comparative) (en % par rapport au poids total de la composition) |
|---|---|---|---|---|
| Paquet additifs | 15.6 | 15.6 | 15,6 | 15.6 |
| Huile de base | 84.2 | 81.4 | 83.6 | 83.7 |
| Copolymère styrène/isoprène hydrogéné étoilé | 0 | 0 | 0.8 | 0.7 |
| Polymère d'alkyle méthacrylate | 0.2 | 3.0 | 0 | 0 |

Les caractéristiques des compositions lubrifiantes sont rassemblées dans le tableau 3 ci-dessous :

**[Table 3]**

| | Composition 1 (selon l'invention) | Composition 2 (selon l'invention) | Composition 3 (comparative) | Composition 4 (comparative) |
|---|---|---|---|---|
| KV 40°C ASTM D445-97 (mm²/s) | 31,79 | 24,89 | 28,55 | 29,1 |
| KV 100°C ASTM D445-97 (mm²/s) | 6,254 | 5,837 | 5,894 | 6,038 |
| HTHS 150°C CEC L-036-90 ou ASTM D4683 | 2,13 | 2,07 | 2,06 | 2,12 |
| CCS -35°C ASTM D 5293 | 5531 | 1804 | 4177 | 3941 |
| Noack ASTM D5800 ou CEC L-040-93 | 12,7% | 11,7% | 15,0% | 12,0% |

### Exemple 2 : Mesure du nombre de particules émises

Les compositions de l'exemple 1 ont subi le test WLTC et la quantité de particules par kilomètres parcourus présentant une taille inférieure ou égale à 23 nm émises à la fin de chaque cycle a été mesurée.

Les tests moteurs ont été effectués sur des moteurs 4 cylindres en ligne turbocompressé. Les tests sont faits à la même température de départ du moteur. Toutes les autres conditions du banc d'essai ont également été maintenues constantes. L'échantillonnage pour les mesures des gaz d'échappement a été effectué dans les gaz d'échappement bruts avant le système d'échappement mais après les systèmes de traitement. Ainsi, les effets observés sont bien dus à la seule utilisation de la composition lubrifiante et donc à l'utilisation du polymère et non à un autre critère quelconque comme la présence d'un conducteur, le poids du véhicule, la température, l'humidité, etc.

La distribution granulométrique a été mesurée en parallèle par un spectromètre à mobilité différentielle Cambustion (DMS500). Il utilise une décharge haute tension pour charger chaque particule proportionnellement à sa surface. Les particules chargées sont introduites dans une section de classification avec un fort champ électrique radial. Ce champ provoque la dérive des particules à travers un flux dans une colonne vers les détecteurs d'électromètre. Les particules sont détectées à différentes distances dans la colonne, en fonction de leur rapport résistance aérodynamique / charge. Les sorties des 22 électromètres sont traitées en temps réel à 10 Hz pour fournir des données spectrales et d'autres mesures.

**[Table 4]**

| | Composition 1 (selon l'invention) (nombre de particules taille inférieure ou égale à 23 nm) | Composition 2 (selon l'invention) (nombre de particules taille inférieure ou égale à 23 nm) | Composition 3 (comparative) (nombre de particules taille inférieure ou égale à 23 nm) | Composition 4 (comparative) (nombre de particules taille inférieure ou égale à 23 nm) |
|---|---|---|---|---|
| Cycle urbain | 3,37E+10 | 3,93 E+ 10 | 5,17E+10 | 5,15E+10 |
| Cycle péri-urbain | 2,88E+10 | 3,87E+10 | 4,43E+10 | 5,36E+10 |
| Cycle routier | 1,15E+10 | 1,74E+10 | 1,93E+10 | 2,08E+10 |
| Cycle autoroutier | 1,64E+10 | 1,42E+10 | 1,40E+10 | 1,16E+10 |
| Cycle WLTC entier (moyenne pondérée par la distance de chaque phase) | 1,9760E+10 | 2,3562E+10 | 2,6904E+10 | 2,8380E+10 |

Ces résultats montrent que l'ajout d'un polymère d'alkyle méthacrylate dans une composition lubrifiante permet de réduire la quantité de particules, présentant une taille inférieure ou égale à 23 nm, relarguée à l'échappement.

## Revendications

1. Utilisation d'une composition lubrifiante comprenant une huile de base et au moins un polymère d'alkyle méthacrylate, pour réduire les émissions de particules d'un moteur, le polymère d'alkyle méthacrylate étant un polymère en peigne dont les chaînes pendantes comprennent au moins 50 atomes de carbone et choisi parmi les copolymères d'au moins une polyoléfine et d'au moins un poly(alkyl)methacrylate ; les copolymères d'au moins une polyoléfine et d'au moins un poly(alkyl)acrylate.

2. Utilisation selon la revendication 1, dans laquelle le polymère d'alkyle méthacrylate est un polymère en peigne dont les chaînes pendantes sont obtenues par polymérisation ou par copolymérisation d'oléfines, de préférence d'oléfines comprenant de 8 à 17 atomes de carbone et choisies parmi les styrènes, les styrènes substitués, le butadiène additionné en 1 ,4, le butadiène additionné en 1 ,2, les composés de formule (C1) 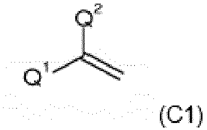 dans laquelle Q¹ et Q² représentent indépendamment un atome d'hydrogène ou un groupement C1-C₁₈-alkyl.

3. Utilisation selon la revendication 1 ou 2, dans laquelle le polymère d'alkyle méthacrylate est préparé par copolymérisation :
▪ d'un monomère oléfinique de formule (C2) 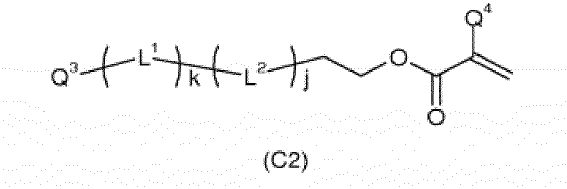 dans laquelle
Q³ représente un groupement C₂-C₈-alkyl linéaire ou ramifié ; un groupement C₃-C₈-cycloalkyl ; un groupement C₆-C₁₀-aryl ;
Q⁴ représente un atome d'hydrogène ou un groupement méthyle ;
L¹ représente un résidu d'addition 1 ,4 de butadiène ; un résidu d'addition 1 ,4 de butadiène substitué par au moins un groupement C1-C₆-alkyl ; un résidu d'addition vinylique de styrène ; un résidu d'addition vinylique de styrène substitué par au moins un groupement C1-Cs-alkyl ;
L² représente un résidu d'addition vinylique de butadiène ; un résidu d'addition vinylique de butadiène substitué par un groupement C1-Cs-alkyl ; un résidu d'addition vinylique de styrène ; un résidu d'addition vinylique de styrène substitué par au moins un groupement C1-Cs-alkyl ;
k et j représentent indépendamment 0 ou un nombre entier allant de 1 à 3 000 et la somme (k + j) est égale à un nombre entier allant de 7 à 3 000, de préférence allant de 10 à 3 000 ; et
▪ d'un monomère ester alkyl-acrylique ou ester alkyl-methacrylique de formule (C3) 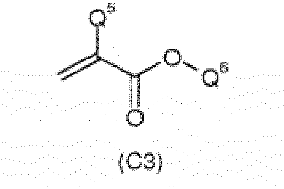 dans laquelle :
Q⁵ représente un atome d'hydrogène ou un groupement méthyle
Q⁶ représente un C1-C26 alkyl linéaire ou ramifié.

4. Utilisation selon la revendication 1 à 3, dans laquelle le polymère d'alkyle méthacrylate est préparé par copolymérisation :
▪ d'un monomère oléfinique de formule (C4) 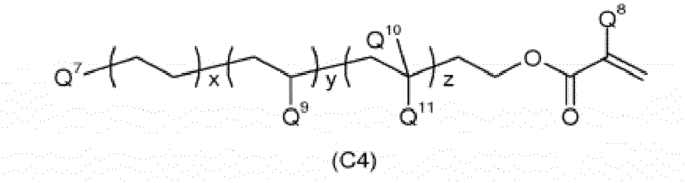 dans laquelle :
Q⁷ représente un groupement C1-Cs-alkyl ; un groupement C₆-aryl ;
Q⁸ représente un atome d'hydrogène ou un groupement méthyle ;
Q⁹, Q¹⁰ et Q¹¹ représentent indépendamment un atome d'hydrogène ou un groupement C1-C₁₈-alkyl ;
x, y et z représentent indépendamment 0 ou un nombre entier allant de 1 à 3 000 et la somme (x + y + z) est égale à un nombre entier allant de 7 à 3 000, de préférence allant de 10 à 3 000 ; et
▪ d'un monomère ester alkyl-acrylique ou ester alkyl-methacrylique de formule (C3) 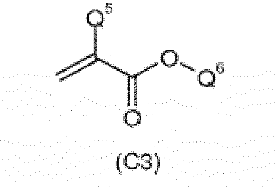 dans laquelle :
Q⁵ représente un atome d'hydrogène ou un groupement méthyle ;
Q⁶ représente un C1-C₂₆-alkyl linéaire ou ramifié.

5. Utilisation selon l'une quelconque des revendications 1 à 4, dans laquelle le polymère d'alkyle méthacrylate est mis en oeuvre en une quantité de 0,1 à 15% en poids par rapport au poids total de la composition lubrifiante.

6. Utilisation d'un polymère alkyle méthacrylate dans une composition lubrifiante pour moteur pour réduire les émissions de particules, le polymère d'alkyle méthacrylate étant un polymère en peigne dont les chaînes pendantes comprennent au moins 50 atomes de carbone et choisi parmi les copolymères d'au moins une polyoléfine et d'au moins un poly(alkyl)methacrylate ; les copolymères d'au moins une polyoléfine et d'au moins un poly(alkyl)acrylate.

7. Utilisation selon l'une quelconque des revendications 1 à 6, dans laquelle les particules présentent une taille inférieure ou égale à 23 nm.

8. Utilisation selon l'une quelconque des revendications 1 à 6, dans laquelle la réduction des émissions de particules concerne les cycles de type urbain, péri-urbain et routier définis par le WLTC et/ou le WLTC entier.

## Patentansprüche

1. Verwendung einer Schmierzusammensetzung, umfassend ein Basisöl und mindestens ein Alkylmethacrylat-Polymer, zum Verringern der Partikelemissionen eines Motors, wobei das Alkylmethacrylat ein Kammpolymer ist, dessen Ketten mindestens 50 Kohlenstoffatomen umfassen und ausgewählt ist aus den Copolymeren von mindestens einem Polyolefin und mindestens einem Poly(alkyl)methacrylat; Copolymeren von mindestens einem Polyolefin und mindestens einem Poly(alkyl)acrylat.

2. Verwendung nach Anspruch 1, wobei das Alkylmethacrylat-Polymer ein Kammpolymer ist, dessen seitenständige Ketten durch Polymerisation oder Copolymerisation von Olefinen erlangt werden, vorzugsweise von Olefinen, umfassend 8 bis 17 Kohlenstoffatome und ausgewählt aus Styrolen, substituierten Styrolen, 1,4-addiertem Butadien, 1,2-addiertem Butadien, Verbindungen von Formel (C1), 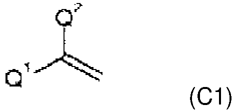 wobei Q¹ und Q² unabhängig ein Wasserstoffatom oder eine C1-C₁₈-Alkylgruppierung darstellen.

3. Verwendung nach Anspruch 1 oder 2, wobei das Alkylmethacrylat-Polymer hergestellt wird durch Copolymerisation:
▪ eines Olefinmonomers von Formel (C2), 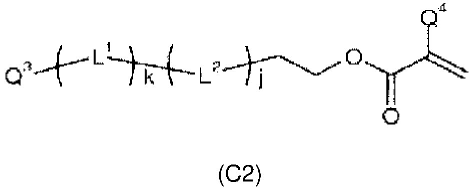 wobei
Q³ eine geradkettige oder verzweigte C₂-C₈-Alkylgruppierung; eine C₃-C₈-Cycloalkylgruppierung; eine C₆-C₁₀-Arylgruppierung darstellt;
Q⁴ ein Wasserstoffatom oder eine Methylgruppierung darstellt;
L¹ einen Butadien-1,4-Additionsrest; einen Butadien-1,4-Additionsrest, der mit mindestens einer C1-C₆-Alkylgruppierung substituiert ist; einen Styrol-Vinyladditionsrest; einen Styrol-Vinyladditionsrest, der mit mindestens einer C1 -C₆-Alkylgruppierung substituiert ist, darstellt;
L² einen Vinyladditionsrest; einen Vinyladditionsrest, der mit einer C1-C₆-Alkylgruppierung substituiert ist; einen Styrol-Vinyladditionsrest; einen Styrol-Vinyladditionsrest, der mit mindestens einer C1-C₆-Alkylgruppierung substituiert ist, darstellt;
k und j unabhängig 0 oder eine ganze Zahl von 1 bis 3000 darstellen und die Summe (k + j) gleich wie eine ganze Zahl von 7 bis 3000, vorzugsweise von 10 bis 3000, ist; und
▪ eines Alkylacrylsäureester- oder Alkylmethacrylsäureestermonomers von Formel (C3), 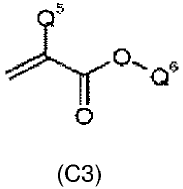 wobei:
Q⁵ ein Wasserstoffatom oder eine Methylgruppierung darstellt;
Q⁶ ein lineares oder verzweigtes C1-C26-Alkyl darstellt.

4. Verwendung nach Anspruch 1 bis 3, wobei das Alkylmethacrylat-Polymer hergestellt wird durch Copolymerisation:
▪ eines Olefinmonomers von Formel (C4), 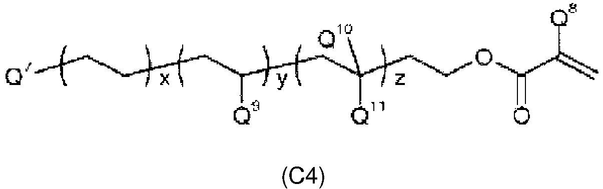 wobei:
Q⁷ eine C1-C₆-Alkylgruppierung; eine C₆-Arylgruppierung darstellt;
Q⁸ ein Wasserstoffatom oder eine Methylgruppierung darstellt;
Q⁹, Q¹⁰ und Q¹¹ unabhängig ein Wasserstoffatom oder eine C1-C₁₈-Alkylgruppierung darstellen;
x, y und z unabhängig 0 oder eine ganze Zahl von 1 bis 3000 darstellen und die Summe (x + y + z) gleich wie eine ganze Zahl von 7 bis 3000, vorzugsweise von 10 bis 3000, ist; und
▪ eines Alkylacrylsäureester- oder Alkylmethacrylsäureestermonomers von Formel (C3), 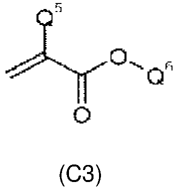 wobei:
Q⁵ ein Wasserstoffatom oder eine Methylgruppierung darstellt;
Q⁶ ein geradkettiges oder verzweigtes C1-C₂₆-Alkyl darstellt.

5. Verwendung nach einem der Ansprüche 1 bis 4, wobei das Alkylmethacrylat-Polymer in einer Menge von 0,1 bis 15 % bezogen auf das Gesamtgewicht der Schmierzusammensetzung eingesetzt wird.

6. Verwendung eines Alkylmethacrylatpolymers in einer Schmiermittelzusammensetzung für einen Motor zum Verringern der Partikelemissionen, wobei das Alkylmethacrylat ein Kammpolymer ist, dessen Ketten mindestens 50 Kohlenstoffatomen umfassen und ausgewählt ist aus den Copolymeren von mindestens einem Polyolefin und mindestens einem Poly(alkyl)methacrylat; Copolymeren von mindestens einem Polyolefin und mindestens einem Poly(alkyl)acrylat.

7. Verwendung nach einem der Ansprüche 1 bis 6, wobei die Partikel eine Größe von weniger als oder gleich wie 23 nm aufweisen.

8. Verwendung nach einem der Ansprüche 1 bis 6, wobei die Verringerung der Partikelemissionen die vom WLTC und/oder vom gesamten WLTC definierten Zyklen im städtischen, periurbanen und auf Fernstraßen betrifft.

## Claims

1. Use of a lubricating composition comprising a base oil and at least one alkyl methacrylate polymer, for reducing particle emissions from an engine, the alkyl methacrylate polymer being a comb polymer whose the pendant chains comprise at least 50 carbon atoms and is chosen from copolymers of at least one polyolefin and at least one poly(alkyl)methacrylate; copolymers of at least one polyolefin and at least one poly(alkyl)acrylate.

2. The use according to claim 1, wherein the alkyl methacrylate polymer is a comb polymer whose the pendant chains are obtained by polymerization or copolymerization of olefins, preferentially olefins comprising from 8 to 17 carbon atoms and chosen from styrenes, substituted styrenes, butadiene with 1,4-addition, butadiene with 1,2-addition, compounds with the formula (C1) 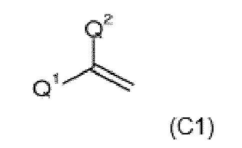 wherein Q¹and Q² independently represent a hydrogen atom or a C₁-C₁₈ -alkyl group.

3. The use according to claim 1 or 2, wherein the alkyl methacrylate polymer is prepared by copolymerization:
▪ of an olefinic monomer with the formula (C2) 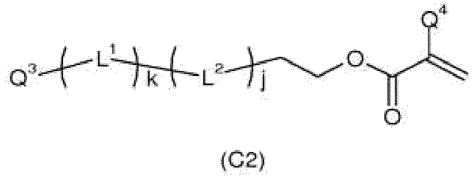 wherein
Q³ represents an either linear or branched C₂-C₈-alkyl group; a C₃-C₈ -cycloalkyl group; a C₆-C₁₀-aryl group;
Q⁴ represents a hydrogen atom or a methyl group;
L¹ represents a 1,4-addition residue of butadiene; a 1,4-addition residue of butadiene substituted with at least one C₁-C₆ alkyl group; a vinyl addition residue of styrene; a vinyl addition residue of styrene substituted with at least one C₁-C₆-alkyl group;
L² represents a vinyl addition residue of butadiene; a vinyl addition residue of butadiene substituted with a C₁-C₆-alkyl group; a vinyl addition residue of styrene; a vinyl addition residue to styrene substituted with at least one C1-Cs-alkyl group;
k and j independently represent 0 or an integer ranging from 1 to 3,000, and the sum (k+j) is equal to an integer ranging from 7 to 3,000, preferentially ranging from 10 to 3,000; and
▪ of an acrylic alkyl ester or methacrylic alkyl ester monomer of formula (C3) 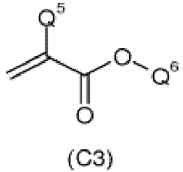 wherein:
Q⁵ represents a hydrogen atom or a methyl group
Q⁶ represents an either linear or branched C₁-C₂₆ alkyl group.

4. Use according to claims 1 to 3, wherein the alkyl methacrylate polymer is prepared by copolymerization:
▪ of an olefinic monomer with the formula (C4) 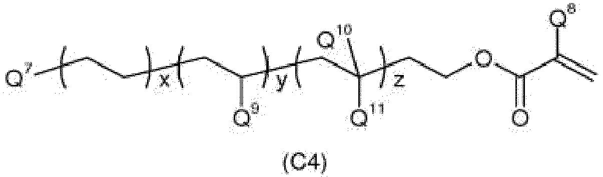 wherein:
Q⁷ represents a C₁-C₆ -alkyl group; a C₆-aryl group;
Q⁸ represents a hydrogen atom or a methyl group;
Q⁹, Q¹⁰ and Q¹¹ independently represent a hydrogen atom or a C₁-C₁₈ -alkyl group;
x, y and z independently represent 0 or an integer ranging from 1 to 3,000 and the sum (x + y + z) is equal to an integer ranging from 7 to 3,000, preferentially from 10 to 3,000; and
▪ of an acrylic alkyl ester or methacrylic alkyl ester monomer with the formula (C3) 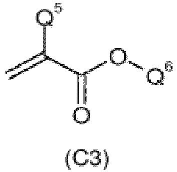 wherein:
Q⁵ represents a hydrogen atom or a methyl group;
Q⁶ represents an either linear or branched C₁-C₂₆-alkyl group.

5. The use according to any of claims 1 to 4, wherein the alkyl methacrylate polymer is used in an amount of 0.1 to 15% by weight with respect to the total weight of the lubricating composition.

6. The use of an alkyl methacrylate polymer in an engine lubricating composition, so as to reduce particle emissions, the alkyl methacrylate polymer being a comb polymer, the alkyl methacrylate polymer being a comb polymer whose the pendant chains comprise at least 50 carbon atoms and is chosen from copolymers of at least one polyolefin and at least one poly(alkyl)methacrylate; copolymers of at least one polyolefin and at least one poly(alkyl)acrylate.

7. The use according to any of claims 1 to 6, wherein the particles have a size less than or equal to 23 nm.

8. The use according to any of claims 1 to 6, wherein the reduction of particle emissions relates to urban, peri-urban and road-type cycles as defined by the WLTC and/or the whole WLTC.
